# EUROPÄISCHE PATENTSCHRIFT

(11) **EP 0 668 225 B1**
(45) Veröffentlichungstag und Bekanntmachung des Hinweises auf die Patenterteilung: **21.01.1998**
(21) Anmeldenummer: 94120655.9
(22) Anmeldetag: 24.12.1994
(51) Int. Cl.: B65G 69/24

(54) **Verladeanlage zum Be- und Entladen von Nutzfahrzeugen und/oder Rampen**
Loading installation for loading or unloading utility vehicles or ramps
Installation de chargement pour véhicules utilitaires ou rampes

(30) Priorität: 21.02.1994 DE 9402749 U
(43) Veröffentlichungstag der Anmeldung: 23.08.1995
(73) Patentinhaber: Schier GmbH & Co. KG, D-33161 Hövelhof (DE)
(72) Erfinder: Schier, Dietmar, Dipl.-Ing., D-31161 Hövelhof (DE); Schier, Manfred, Dipl.-Ing., D-31161 Hövelhof (DE)
(74) Vertreter: Stracke, Alexander, Dipl.-Ing.

(56) Entgegenhaltungen:
- DE-U- 9 402 749
- FR-A- 1 549 307
- GB-A- 1 338 218

## Beschreibung

Die vorliegende Erfindung betrifft eine Verladeanlage zum Be- und Entladen von Nutzfahrzeugen und/oder Rampen mit beladenen oder leeren Fördermitteln, wie Paletten, Rollbehältern, Gitterboxen und dergleichen, mit einer quer zur Laderichtung verfahrbaren Vertikalhubvorrichtung, die mit Horizontalförderelementen ausgerüstet ist.

Aus der GB-A1 338 218 ist ein manuelles Verladeverfahren bekannt, bei dem zum Beladen eines Nutzfahrzeuges dieses an die Vertikalhubvorrichtung herangefahren wird. Die Horizontalförderelemente dieser Vertikalhubvorrichtung bestehen aus zwei beabstandeten Rollenbahnen. Zur Entnahme eines Fördermittels wird von der Rampe ein pneumatischer Gleiter entnommen und unter das Fördermittel geschoben. Durch Beaufschlagung mit Druckluft kann dann das Fördermittel über den Gleiter hinweggeschoben werden. Dieser verbleibt jedoch auf dem Boden des Nutzfahrzeuges. Der weitere Abtransport erfolgt zunächst mittels der Vertikalhubvorrichtung und anschließend durch zusätzliche Förderelemente. Zum Entladen des nächstfolgenden Fördermittels wird ein weiterer pneumatischer Gleiter unter dieses Fördermittel geschoben. Beim Entladen wird demzufolge durch die aneinander gereihten pneumatischen Gleiter eine Förderstrecke geschaffen. Das Beladen eines Nutzfahrzeuges erfolgt in umgekehrter Reihenfolge. Nach diesem Verfahren ist es nicht notwendig, daß das Fahrzeug mit einer Fördertechnik ausgerüstet ist. Durch das manuelle Bewegen der Fördermittel ist die benötigte Zeit zum Be- und Entladen relativ groß. Außerdem sind je nach Größe der Fördermittel mehrere Personen erforderlich. Insgesamt gesehen ist das Verfahren deshalb äußerst unwirtschaftlich. Außerdem ist es für Kühl- und Gefriergut nicht geeignet, da die Waren zu lange der Umgebungstemperatur ausgesetzt sind.

Es sind außerdem Nutzfahrzeuge mit einem Beladesystem bekannt, welches in den Boden integriert ist und beispielsweise aus Schienen besteht, in denen Rollen gelagert sind. Die zu beladenden oder zu entladenden Nutzfahrzeuge werden dazu an eine Beladerampe gefahren, die mit Transportmitteln für die Fördermittel versehen ist. Diese können ebenfalls Rollenbahnen, Förderbänder oder dergleichen sein. Üblicherweise ist eine Verladehalle eines gewerblichen Betriebes mit mehreren im Abstand zueinander stehenden Toren ausgerüstet. An diese Tore schließt sich die Verladerampe an. Durch mehrere Tore besteht die Möglichkeit, daß eine Ladung aus verschiedenen Gütern zusammengestellt wird. Außerdem können mehrere Nutzfahrzeuge gleichzeitig beladen werden. Es besteht allerdings keine Möglichkeit, von verschiedenen Stellen Güter auf ein Nutzfahrzeug zu verladen. Darüber hinaus sind Nutzfahrzeuge bekannt, deren Laderaum durch einen verstellbaren oder festen Zwischenboden in der Höhe geteilt werden kann. Mit den zuvor beschriebenen Systemen ist es dann nicht möglich, die obere Etage eines Fahrzeuges zu beladen.

Der vorliegenden Erfindung liegt ausgehend von dem durch die GB-A-1 338 218 bekannten Stand der Technik die Aufgabe zugrunde, eine Verladeanlage der eingangs näher beschriebenen Art zu schaffen, mit der es möglich ist, die Fördermittel ohne manuelle Verschiebung zu be- oder entladen, wobei ein Fahrzeug verwendet werden kann, welches kein Beladesystem aufweist. Außerdem soll die Verladung von mehreren Stellen aus erfolgen bzw. beim Entladen sollen die Fördermittel an verschiedenen Stellen abgestellt werden können. Darüber hinaus soll ggfs. auch die obere Etage eines durch einen Zwischenboden in der Höhe geteilten Laderaumes be- oder entladen werden können.

Die gestellte Aufgabe wird gelöst, indem die Horizontalförderelemente der Vertikalhubvorrichtung aus mindestens einer Tragschiene bestehen, deren Länge mit den größten Längen der Laderäume der zu beladenden Nutzfahrzeuge bzw. der Rampen übereinstimmt oder annähernd übereinstimmt, und daß die Tragschienen mittels eines reversierbaren Antriebes oszillierend antreibbar sind.

Die erfindungsgemäße Verladeanlage wird stirnseitig vor einer Verladerampe montiert. Diese Verladerampe kann auch beispielsweise die Geschoßdecke einer Verladehalle sein. Bei der Be- oder Entladung eines Nutzfahrzeuges liegt die Verladeanlage dann zwischen der Rampe und dem Heck des Nutzfahrzeuges. Durch die Vertikalhubeinrichtung ist es möglich, daß Höhendifferenzen zwischen der Verladerampe und dem Boden des Nutzfahrzeuges ausgeglichen werden. Ferner ist es möglich, daß die Fördermittel aus verschiedenen Höhen beispielsweise von der Erdgeschoßdecke und der darüber liegenden Obergeschoßdecke entnommen bzw. dort hingebracht werden können. Es ist auch möglich, die obere Etage oder die oberen Etagen eines mit mindestens einem Zwischenboden ausgerüsteten Nutzfahrzeuges zu beladen bzw. zu entladen.

Durch die quer zur Laderichtung verfahrbare Vertikalhubvorrichtung ist es außerdem möglich, daß die Tragschienen Fördermittel aufnehmen können, die nicht in der Verlängerung des Nutzfahrzeuges abgestellt sind, sondern seitlich daneben. In umgekehrter Weise können auch Fördermittel aus dem Nutzfahrzeug an diese besagten Stellen abgestellt werden. Diese Möglichkeit ist insbesondere dann vorteilhaft, wenn beispielsweise ein Nutzfahrzeug mit Frischgütern der verschiedensten Art beladen wird. Darüber hinaus bietet die erfindungsgemäße Verladeanlage noch den Vorteil, daß beim Beladen eines Nutzfahrzeuges auch leere Fördermittel im Zuge der Rückbewegung abtransportiert werden können.

Die Tragschiene bzw. die Tragschienen übernehmen die Fördermittel, die auf der Rampe abgestellt sind, indem sie nach dort ausgefahren werden. Die Tragschienen übernehmen stets und geben wieder ab, beispielsweise beim Kommissionieren oder beim Umladen auf ein anderes Fahrzeug. Die Tragschienen können verschiedenartig ausgelegt sein. So ist es beispielsweise denkbar, daß beim Be- oder Entladen eines Nutzfahrzeuges die Tragschienen in das Fahrzeug eingefahren werden und die Fördermittel dann einzeln entweder in das Nutzfahrzeug hinein- oder herausgeschoben werden. Ferner ist es denkbar, daß die Tragschienen über die gesamte Länge Fördermittel aufnehmen, und daß dann entweder die Tragschienen in das Nutzfahrzeug bzw. in den Bereich der Rampe hinein- oder herausgefahren werden. Da die Länge mit der größten Länge des Laderaumes eines Nutzfahrzeuges übereinstimmt oder im wesentlichen übereinstimmt, kann der Laderaum über die gesamte Länge be- oder entladen werden. Dadurch kann der Laderaum von der Heckklappe bis zur Stirnwand beladen werden. Durch den reversierbaren Antrieb kann das Verfahren der Tragschienen ohne manuellen Kraftaufwand erfolgen.

Konstruktiv wird eine besonders einfache Lösung erreicht, wenn die Vertikalhubvorrichtung auf quer zur Laderichtung stehenden Laufschienen verfahrbar ist. Dadurch ist die Vertikalhubvorrichtung exakt geführt. Zur exakten Führung der ausfahrbaren Tragschienen ist vorgesehen, daß sie in Führungsschienen geführt sind, die an der Vertikalhubvorrichtung festgelegt sind. Außerdem ergibt sich eine konstruktiv einfache Lösung. Eine Tragschiene mit einer Führungsschiene könnte man auch als Doppelschiene sehen und sinngemäß wirkt sie wie ein beidseitig ausfahrbares Teleskop. Zur leichten Aufnahme und Abgabe eines leeren oder beladenen Fördermittels ist in weiterer Ausgestaltung vorgesehen, daß jede Tragschiene auf zwei ineinander greifenden Profilschienen gebildet ist, daß die obere Schiene mittels eines mit einem Druckmittel beaufschlagbaren Druckkissens anhebbar ist, und daß an der anderen Profilschiene im Abstand zueinander angeordnete Laufrollen gelagert sind, die um Horizontalachsen drehbar sind. Zur Aufnahme der Fördermittel wird zunächst die obere Profilschiene abgesenkt, indem das Druckkissen drucklos gemacht wird. Die Tragschiene bzw. die Tragschienen können dann unter die Fördermittel gefahren werden. Durch Druckbeaufschlagung des Druckkissens wird die obere Profilschiene soweit angehoben, daß die Fördermittel vom Boden abgehoben werden. Die Tragschienen können dann in den Laderaum bzw. auf die Rampe gefahren werden. Zum Absetzen der Fördermittel wird das Druckkissen wieder drucklos gemacht, so daß die Tragschiene entgegen der Laderichtung verfahren werden kann. Da die Fördermittel dann auf dem Fußboden stehen, verbleiben sie entweder im Laderaum des Nutzfahrzeuges oder auf der Rampe. Der reversierbare Antrieb für die Tragschiene läßt sich besonders konstruktiv einfach lösen, wenn an der die Laufrollen tragenden Profilschiene mindestens eine Verzahnung vorgesehen ist, die mit wenigstens einem rotierend antreibbaren Ritzel in Eingriff steht. Dieses Ritzel kann direkt drehfest auf den Abtriebszapfen eines Getriebemotors aufgesetzt werden oder es kann Bestandteil einer Räderkette sein. Die Verzahnung könnte beispielsweise durch eine entsprechende Bearbeitung eines Steges der Profilschiene gebildet werden. Fertigungstechnisch ist es jedoch wirtschaftlicher, wenn die Verzahnung durch eine an die untere Profilschiene festgelegte Zahnstange gebildet ist. Diese Zahnstange kann dann beispielsweise aus mehreren Teilstücken zusammengesetzt werden und von Firmen hergestellt werden, die dafür entsprechend eingerichtet sind.

Da das Gewicht der beladenen Fördermittel relativ hoch ist, ist in weiterer Ausgestaltung vorgesehen, daß die Hubeinrichtung als Hubschere ausgebildet ist. Mittels dieser Hubschere lassen sich bei der entsprechenden Auslegung hohe Kräfte übertragen. Außerdem handelt es sich um ein robustes, einfaches Bauteil. Die Betätigung der sich kreuzenden Scherenarme kann durch eine Kolbenzylindereinheit, vorzugsweise durch einen Hydraulikzylinder oder durch einen elektromotorischen Antrieb erfolgen.

Anhand der beiliegenden Zeichnungen wird die Erfindung noch näher erläutert.
Es zeigen:
- Figur 1: eine erfindungsgemäße Verladeanlage in Draufsicht, rein schematisch,
- Figur 2: die Verladeanlage gemäß Figur 1 im Aufriß,
- Figur 3: eine Ausführungsform der Tragschienen in einer Stirnansicht,
- Figur 4: die Möglichkeit der Aufnahme eines Rollbehälters und einer Euro-Palette in einer Stirnansicht und
- Figur 5: eine Ausführungsform einer Verladeanlage in einer Stirnansicht, ausgelegt für drei Reihen von in einem Laderaum unterzubringenden Rollbehältern.

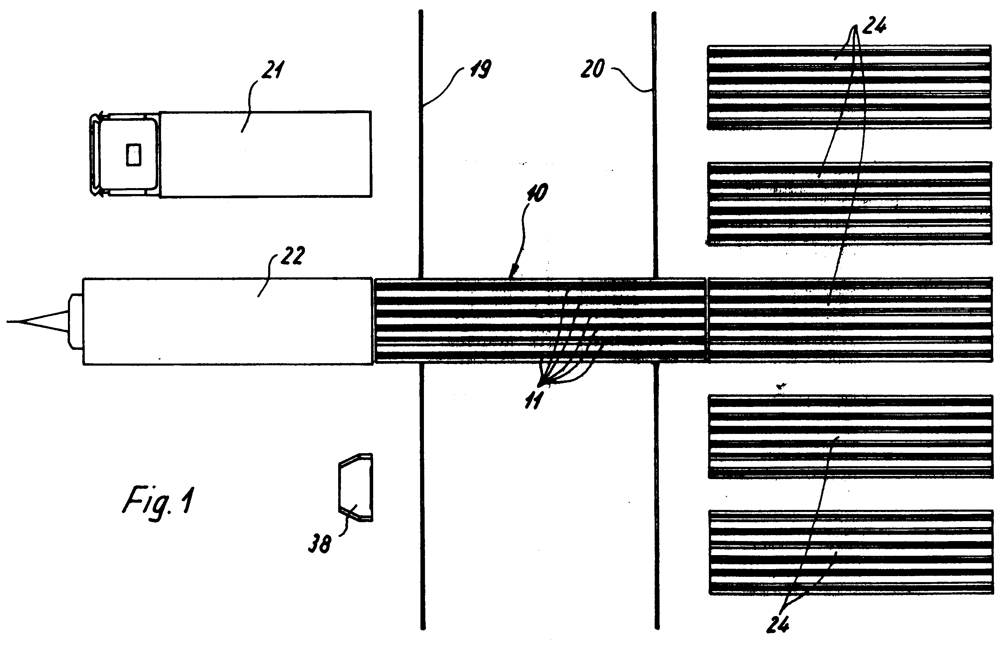

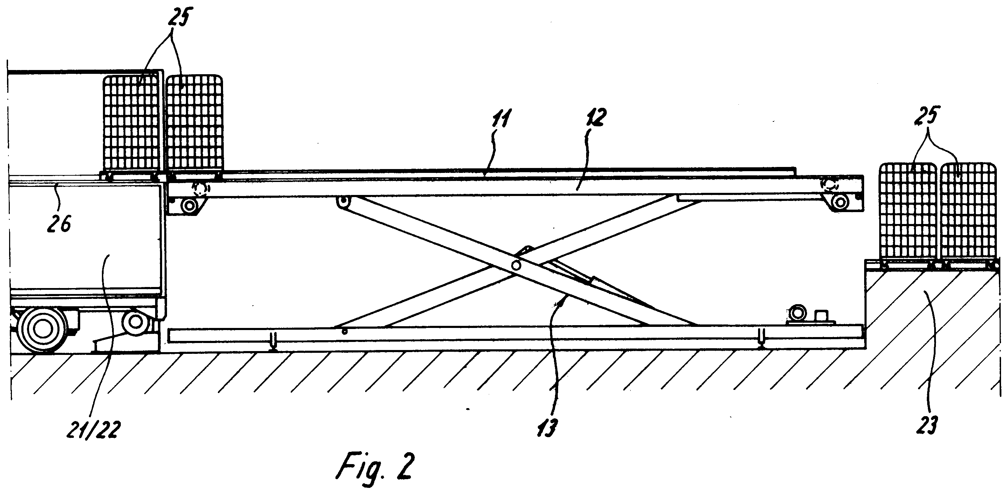

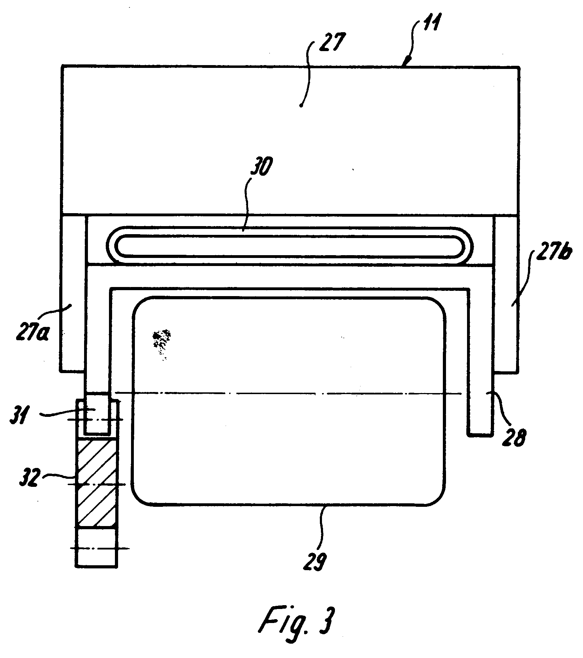

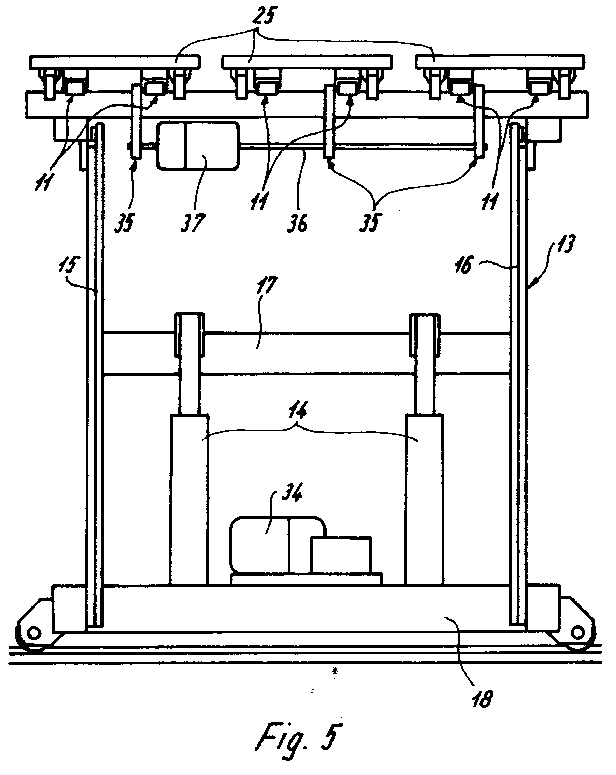

In der Figur 1 ist die erfindungsgemäße Verladeanlage zum Be- und Entladen das Bezugszeichen 10 gekennzeichnet. Sie enthält im dargestellten Ausführungsbeispiel sechs parallel und im Abstand zueinander angeordnete Tragschienen 11, wie anhand der Figur 5 noch näher beschrieben wird. Die Tragschienen 11 sind in Führungsschienen 12 geführt, die an einer Vertikalhubvorrichtung festgelegt sind. Im dargestellten Ausführungsbeispiel ist die Vertikalhubvorrichtung eine Hubschere 13, die von einer Kolbenzylindereinheit in Form eines Hydraulikzylinders 14 betätigbar ist. Aus der Figur 2 ergibt sich, daß die Tragschienen in vertikaler Richtung verfahrbar sind. Die Hubschere 13 besteht aus zwei parallel und im Abstand zueinander stehenden Scheren 15, 16, die über eine Achse 17 verbunden sind. Diese Achse 17 ist die Drehachse der Scherenarme der Scheren 15, 16. An der unteren, den Tragschienen 11 abgewandten Seiten sind die Scheren 15, 16 an einem mit Laufrollen versehenen Fahrgestell 18 angeordnet. Die Laufrollen sind in zwei parallel und im Abstand zueinander verlaufenden Führungsschienen 19, 20 verfahrbar. Die Führungsschienen 19, 20 stehen quer zur Laderichtung bzw. quer zu den Tragschienen 11. Demzufolge sind die Tragschienen 11 nicht nur in der Höhe verstellbar sondern auch quer zur Laderichtung. In der Figur 1 ist angedeutet, daß die Ladeanlage 10 zwischen dem Heck von zwei Nutzfahrzeugen 21, 22 und einer Verladerampe 23 installiert ist. Die Rampe 23 kann sinngemäß wie ein Hochregallager gestaltet sein oder auch außerhalb eines Gebäudes liegen bzw. auch die Decke eines Gebäudes sein. In der Rampe bzw. in den Rampen 23 sind gemäß der Darstellung nach der Figur 1 fünf nicht näher erläuterte Stellflächen 24 für die Fördermittel installiert. Aus der Figur 2 ergibt sich, daß die obere Fläche der Laderampe 23 nicht mit dem Boden des Nutzfahrzeuges 21 oder 22 höhenmäßig übereinstimmt. Ferner zeigt die Figur 2, daß das Nutzfahrzeug 21 oder 22 mit einem verstellbaren Zwischenboden 26 ausgerüstet sein kann. Aus der Figur 2 ergibt sich, daß zur Aufnahme der zu verladenen Rollbehälter 25 die Tragschienen 11 auf das Niveau der auf der Laderampe 23 stehenden Rollbehälter so abgesenkt wird, daß die Tragschienen 11 die Rollbehälter 25 untergreifen. Nach der in noch näher beschriebener Weise erläuterten Aufnahme wird die Hubschere 13 bzw. werden die Tragschienen 11 auf das Niveau des Bodens des Nutzfahrzeuges 21, 22 angehoben oder abgesenkt oder gemäß der Figur 2 auf das Niveau des Zwischenbodens 26. Die Tragschienen 11 werden dann in den Laderaum des Nutzfahrzeuges 21 oder 22 hineinverfahren. Die Rollbehälter 25 werden dort abgestellt, wie noch erläutert wird. Die Figur 3 zeigt eine Form einer Tragschiene 11. Danach besteht sie aus zwei ineinander greifenden Profilschienen 27, 28. Die untere, der Hubschere 13 zugewandte Profilschiene 28 ist eine nach unten offene U-Profilschiene. In den beiden parallelen Schenkeln sind eine Vielzahl von Laufrollen 29 frei drehbar gelagert. Die obere Profilschiene 27 ist an der oberen, d. h., der Profilschiene 28 abgewandten Seite glattflächig. An der unteren Seite sind zwei Führungsstege 27a und 27b angesetzt, die die äußeren Flächen der parallelen Schenkel der unteren Profilschiene 28 kontaktieren. Mittels eines mit einem Druckmittel beaufschlagbaren Druckkissens 30 kann die obere Profilschiene 27 angehoben werden. Sobald das Druckkissen 30 wieder drucklos wird, wird die in der Figur 3 dargestellte, abgesenkte Position der oberen Profilschiene 27 erreicht. Im dargestellten Ausführungsbeispiel ist der freie Rand eines der beiden parallelen Schenkel der unteren U-Profilschiene 28 mit einer Verzahnung 31 versehen. In diese Verzahnung 31 greift ein stirnverzahntes Zahnrad 32 oder eine Kette ein. Dieses Zahnrad 32 kann in nicht dargestellter Weise auf den Abtriebszapfen eines nicht dargestellten Antriebes drehfest aufgesetzt sein oder bei Verwendung kann das Kettenrad drehfest auf den Abtriebszapfen aufgesetzt sein. Es kann aber auch Bestandteil einer Räderkette sein. Diese Verzahnung 31 dient zum Verfahren der Tragschiene 11 in zwei entgegengesetzten Richtungen. Im Gegensatz zur dargestellten Ausführung kann auch an wenigstens einem der parallelen Schenkel der U-Profilschiene 28 eine Zahnstange festgelegt sein, die dann mit dem Zahnrad 32 oder einer Kette in Eingriff steht.

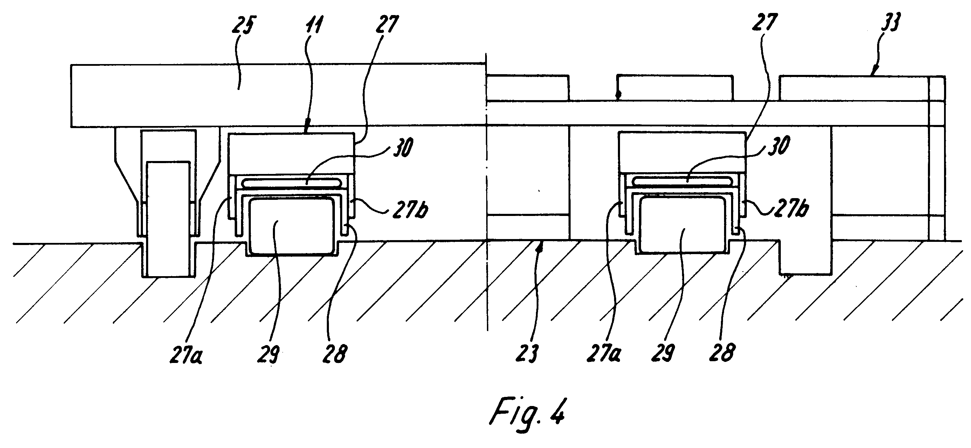

Die Figur 4 zeigt in der linken Hälfte die Aufnahme eines Rollbehälters 25 und in der rechten Hälfte die Aufnahme einer Euro-Palette 33. Zur Aufnahme werden jeweils zwei Tragschienen 11 unter den jeweiligen Rollbehälter 25 bzw. unter die Euro-Palette 33 gefahren. Dazu befindet sich die obere Profilschiene 27 in der abgesenkten Stellung, d. h., das Druckkissen 30 ist drucklos. Wenn mehrere Rollbehälter 25 bzw. Euro-Paletten 33 hintereinander stehen, können sie auch gemeinsam aufgenommen werden. Die Laufrollen des Rollbehälters 25 sind in Führungen eingelassen, so daß der Rollbehälter 25 exakt positioniert ist. Auch die Euro-Paletten müssen exakt positioniert sein. Sobald das Druckkissen 30 durch Druckbeaufschlagung die obere Profilschiene 27 anhebt, kommt der Rollbehälter 27 bzw. die Euro-Palette 33 außer Kontakt mit dem Boden. Die Tragschienen 11 können dann in ihrer Längsrichtung in beiden Richtungen verfahren werden, indem das stirnverzahnte Zahnrad 32 in entsprechender Drehrichtung angetrieben wird. Zweckmäßigerweise erfolgt der Antrieb jedoch durch zwei im Abstand zueinander stehende Zahnräder 32, die im Bereich der beiden Enden der Tragschienen 11 angeordnet sind, wenn sie sich in der Grundstellung, d. h, zwischen dem Heck des Nutzfahrzeuges 21 bzw. 22 und der Laderampe befinden. Nachdem die jeweiligen Tragschienen 11 in den Laderaum des Nutzfahrzeuges 21 bzw. 22 verfahren wurden, werden die Druckkissen 30 drucklos gemacht. Dadurch wird die obere Profilschiene 27 abgesenkt, so daß die Rollbehälter 25 bzw. die Euro-Paletten 30 auf den jeweiligen Boden abgestellt werden. Die Tragschienen 11 können dann aus dem Laderaum des Nutzfahrzeuges 21 bzw. 22 herausgefahren werden. Das Entladen eines Fahrzeuges erfolgt in umgekehrter Reihenfolge. Das Aufnehmen bzw. die Abgabe der Fördermittel von der Rampe bzw. an die Rampe erfolgt entsprechend.

Aus der Figur 1 in Verbindung mit der Figur 5 geht hervor, daß die gesamte Ladeanlage rechtwinklig zur Laderichtung bzw. zur Längsachse des Nutzfahrzeuges 21 bzw. 22 verfahrbar ist. Dazu ist das Fahrgestell 18 mit einem nicht näher erläuterten Antrieb 34 ausgerüstet. Die Figur 5 zeigt außerdem, daß die Höhenverstellung der Hubschere 13 durch zwei Hydraulikzylinder 14 erfolgt. Die Figur 5 zeigt, daß die Verladeanlage mit insgesamt sechs der bereits beschriebenen Tragschienen 11 ausgerüstet ist, die parallel und im Abstand zueinander derart stehen, daß zwei oder drei nebeneinander stehende Rollbehälter 25 aufgenommen werden können. Die Rollbehälter 25 sind so ausgelegt, daß sie nebeneinander in den Laderaum eines Nutzfahrzeuges 21 oder 22 gestellt werden können. Aus Gründen der vereinfachten Darstellung ist nur jeweils eine der beiden einen Rollbehälter 25 untergreifenden Profilschienen angetrieben. Dieser Antrieb erfolgt über eine Räderkette 35, deren antreibendes Zahnrad auf eine gemeinsame Antriebswelle 36 aufgekeilt ist. Die Antriebswelle 36 wird von einem Motor 37 angetrieben. Wie bereits gesagt, kann eine zweite Antriebseinrichtung an geeigneter Stelle montiert sein.

Aus den Figuren ergibt sich, daß die aufzunehmenden Fördermittel an beliebiger Stelle innerhalb der Rampe plaziert werden können. Es können auch gleichzeitig mehrere Nutzfahrzeuge 21 bzw. 22 be- oder entladen werden. Beim Be- und Entladen kann im Zuge der Rückbewegung Leergut mitgenommen werden und an freien Rampenplätzen wieder abgestellt bzw. in ein anderes Nutzfahrzeug umgeladen werden. Ferner ergibt sich aus den Figuren, daß jedes Fahrzeug be- oder entladen werden kann, ohne daß dazu spezielle Einrichtungen am Nutzfahrzeug notwendig sind.

In der Figur 1 ist durch das Bezugszeichen 38 eine Fahrzeugjustiereinrichtung gekennzeichnet.

Anstelle der Hubschere 13 kann die Vertikalhubvorrichtung auch nach Art eines allgemein bekannten Fahrstuhles gestaltet sein.

## Patentansprüche

1. Verladeanlage zum Be- und Entladen von Nutzfahrzeugen (21, 22) und/oder Rampen (23) mit beladenen oder leeren Fördermitteln (25), wie Paletten, Rollbehältern, Gitterboxen und dergleichen, mit einer quer zur Laderichtung verfahrbaren Vertikalhubvorrichtung (13), die mit Horizontalförderelementen ausgerüstet ist, **dadurch gekennzeichnet, daß** die Horizontalförderelemente der Vertikalhubvorrichtung (13) aus mindestens einer Tragschiene (11) bestehen, deren Länge mit den größten Längen der Laderäume der zu beladenen Nutzfahrzeuge (21, 22) bzw. der Rampen (23) übereinstimmt oder annähernd übereinstimmt, und daß die Tragschienen (11) mittels eines reversierbaren Antriebes (32, 35, 36, 37) oszillierend antreibbar sind.

2. Verladeanlage nach Anspruch 1, **dadurch gekennzeichnet, daß** die Vertikalhubvorrichtung (13) auf quer zur Laderichtung stehenden Führungsschienen (19, 20) verfahrbar ist.

3. Verladeanlage nach Anspruch 1, **dadurch gekennzeichnet, daß** die Tragschienen (11) in Führungsschienen (12) geführt sind, die an der Vertikalhubvorrichtung (13) festgelegt sind.

4. Verladeanlage nach Anspruch 1, **dadurch gekennzeichnet, daß** jede Tragschiene (11) aus zwei ineinander greifenden Profilschienen (27, 28) gebildet ist, daß die obere Profilschiene (27) mittels eines mit einem Druckmittel beaufschlagbaren Druckkissens (30) anhebbar ist und daß an der unteren Profilschiene (28) im Abstand zueinander angeordnete Laufrollen (29) gelagert sind, die um Horizontalachsen drehbar sind.

5. Verladeanlage nach Anspruch 4, **dadurch gekennzeichnet, daß** die untere Profilschiene (28) eine nach unten offene U-Profilschiene ist und daß an der oberen Profilschiene (27) zwei die Außenflächen der parallelen Schenke kontaktierende Führungsstege (27a, 27b) angesetzt sind.

6. Verladeanlage nach Anspruch 4, **dadurch gekennzeichnet, daß** die untere, die Laufrollen (29) aufweisende Profilschiene (28) der jeweiligen Tragschiene (11) mindestens eine Verzahnung (31) aufweist, die mit wenigstens einem stirnverzahnten Zahnrad (32) oder einer Kette in Eingriff steht.

7. Verladeanlage nach Anspruch 6, **dadurch gekennzeichnet, daß** die Verzahnung durch eine an die untere Profilschiene (28) festgelegte Zahnstange gebildet ist.

8. Verladeanlage nach Anspruch 1, **dadurch gekennzeichnet, daß** die Vertikalhubeinrichtung als Hubschere (13) oder nach Art eines Fahrstuhles ausgebildet ist.

9. Verladeanlage nach Anspruch 8, **dadurch gekennzeichnet, daß** die Hubschere (13) zwei parallel und im Abstand zueinander stehende Scheren (15, 16) beinhaltet und daß der Antrieb zur Höhenverstellung aus zwei Hydraulikzylindern (14) gebildet ist.

10. Verladeanlage nach Anspruch 8, **dadurch gekennzeichnet, daß** die Hubschere (13) ein mit Laufrollen ausgerüstetes Fahrgestell (18) beinhaltet, wobei die Laufrollen auf Führungsschienen (19,20) abwälzen.

## Claims

1. A loading installation for loading and unloading commercial vehicles (21, 22) and/or ramps (23) with loaded or empty conveyor means (25) such as pallets, rolling containers, grid-type boxes and the like, comprising a vertical lift device (13) which is displaceable transversely with respect to the loading direction and which is provided with horizontal conveyor elements, characterised in that the horizontal conveyor elements of the vertical lift device (13) comprise at least one support rail (11) whose length is the same or approximately the same as the greatest lengths of the load spaces of the commercial vehicles (21, 22) to be loaded or the ramps (23), and that the support rails (11) are oscillatingly drivable by means of a reversible drive (32, 35, 36, 37).

2. A loading installation according to claim 1 characterised in that the vertical lift device (13) is displaceable on guide rails (19, 20) which are disposed transversely with respect to the loading direction.

3. A loading installation according to claim 1 characterised in that the support rails (11) are guided in guide rails (12) which are fixed to the vertical lift device (13).

4. A loading installation according to claim 1 characterised in that each support rail (11) is formed from two shaped rails (27, 28) which engage into each other, that the upper shaped rail (27) can be lifted by means of a pressure cushion (30) which can be acted upon by a pressure agent, and that mounted on the lower shaped rail (28) are rollers (29) which are arranged at a spacing relative to each other and which are rotatable about horizontal axes.

5. A loading installation according to claim 4 characterised in that the lower shaped rail (28) is a downwardly open U-shaped rail and that fitted to the upper shaped rail (27) are two guide flanges (27a, 27b) which contact the outside surfaces of the parallel limbs.

6. A loading installation according to claim 4 characterised in that the lower shaped rail (28) of the respective support rail (11), having the rollers (29), has at least one tooth configuration (31) which is in contact with at least one spur gear (32) or a chain.

7. A loading installation according to claim 6 characterised in that the tooth configuration is formed by a rack secured to the lower shaped rail (28).

8. A loading installation according to claim 1 characterised in that the vertical lift device is in the form of a scissor lifting assembly (13) or in the nature of an elevator lift.

9. A loading installation according to claim 8 characterised in that the scissor lifting assembly (13) has two scissor arrangements (15, 16) which are arranged parallel and at a spacing relative to each other and that the drive for heightwise adjustment is formed from two hydraulic cylinders (14).

10. A loading installation according to claim 8 characterised in that the scissor lifting assembly (13) includes a chassis (18) provided with rollers, the rollers rolling on guide rails (19, 20).

## Revendications

1. Installation de chargement servant à charger et décharger des véhicules utilitaires (21, 22) et/ou des rampes (23) avec des moyens de transport (25) chargés ou vides, tels que des palettes, des récipients roulants, des conteneurs à claire-voie et similaires, comportant un dispositif élévateur à la verticale (13) susceptible d'être déplacé perpendiculairement à la direction de chargement, équipé d'éléments de transport à l'horizontale, caractérisée en ce que les éléments de transport à l'horizontale du dispositif élévateur à la verticale (13) sont constitués d'au moins un rail porteur (11), dont la longueur correspond, ou correspond approximativement, aux plus grandes longueurs des compartiments à marchandises des véhicules utilitaires (21, 22) et/ou des rampes (23) à charger, et en ce que les rails porteurs (11) sont susceptibles d'être entraînés en oscillation au moyen d'un entraînement (32, 35, 36, 37) réversible.

2. Installation de chargement selon la revendication 1, caractérisée en ce que le dispositif élévateur à la verticale (13) est susceptible d'être déplacé sur des rails de guidage (19, 20) perpendiculaires à la direction de chargement.

3. Installation de chargement selon la revendication 1, caractérisée en ce que les rails porteurs (11) sont guidés dans des rails de guidage (12), qui sont fixés sur le dispositif élévateur à la verticale (13).

4. Installation de chargement selon la revendication 1, caractérisée en ce que chaque rail porteur (11) est formé par deux rails profilés (27, 28) emboîtés l'un dans l'autre, en ce que le rail profilé supérieur (27) est susceptible d'être soulevé par un coussin de pression (30) dans lequel peut être injecté un fluide sous pression, et en ce que sont montés, sur le rail profilé inférieur (28), à distance les uns des autres, des galets de roulement (29) qui sont susceptibles de tourner autour d'axes horizontaux.

5. Installation de chargement selon la revendication 4, caractérisée en ce que le rail profilé inférieur (28) est un rail profilé en U ouvert en direction du bas, et en ce que deux barrettes de guidage (27a, 27b), contactant les surfaces extérieures des branches parallèles, sont placées sur le rail profilé supérieur (27).

6. Installation de chargement selon la revendication 4, caractérisée en ce que le rail profilé inférieur (28), présentant les galets de roulement (29), de chaque rail porteur (11), présente au moins une denture (31), qui engrène avec au moins une roue dentée (32) à denture frontale ou avec une chaîne.

7. Installation de chargement selon la revendication 6, caractérisée en ce que la denture est formée par une crémaillère fixée sur le rail profilé inférieur (28).

8. Installation de chargement selon la revendication 1, caractérisée en ce que le dispositif élévateur à la verticale est conformé en fourche élévatrice (13) ou à la façon d'un ascenseur.

9. Installation de chargement selon la revendication 8, caractérisée en ce que la fourche élévatrice (13) comprend deux fourches (15, 16) parallèles et espacées l'une de l'autre, et en ce que l'entraînement permettant le déplacement en hauteur est constitué de deux vérins hydrauliques (14).

10. Installation de chargement selon la revendication 8, caractérisée en ce que la fourche élévatrice (13) comprend un chariot (18) équipé de galets de roulement, les galets de roulement roulant sur des rails de guidage (19, 20).
